# EUROPÄISCHE PATENTSCHRIFT

(11) **EP 3 425 865 B1**
(45) Veröffentlichungstag und Bekanntmachung des Hinweises auf die Patenterteilung: **18.12.2019**
(21) Anmeldenummer: 17179719.4
(22) Anmeldetag: 05.07.2017
(51) Int. Cl.: H04L 29/06

(54) **VERFAHREN UND VORRICHTUNG ZUR RÜCKWIRKUNGSFREIEN UNIDIREKTIONALEN ÜBERTRAGUNG VON DATEN AN EINEN ABGESETZTEN ANWENDUNGSSERVER**
METHOD AND DEVICE FOR UNIDIRECTIONAL TRANSMISSION OF DATA TO A REMOTE APPLICATION SERVER WITHOUT FEEDBACK
PROCÉDÉ ET DISPOSITIF DE TRANSMISSION UNIDIRECTIONNELLE SANS RÉPERCUSSION DE DONNÉES À UN SERVEUR D'APPLICATION À DISTANCE

(43) Veröffentlichungstag der Anmeldung: 09.01.2019
(73) Patentinhaber: Siemens Mobility GmbH, 81739 München (DE)
(72) Erfinder: Falk, Rainer, 85586 Poing (DE); Wimmer, Martin, 85579 Neubiberg (DE)

(56) Entgegenhaltungen:
- US-B1- 7 941 526
- discussionhow ET AL: "How Does a Data Diode Work?", , 1. Februar 2017 (2017-02-01), XP055418964, Gefunden im Internet: URL:https://www.deep-secure.com/wp-content /uploads/2017/03/How-does-a-Data-Diode-wor k.pdf [gefunden am 2017-10-25]

## Beschreibung

Die Erfindung betrifft ein Verfahren, eine Vorrichtung sowie ein Computerprogrammprodukt zur rückwirkungsfreien unidirektionalen Übertragung von Daten von einer ersten Netzwerkzone zur Auswertung an einen abgesetzten Anwendungsserver in einer zweiten Netzwerkzone. Insbesondere handelt es sich bei der ersten Netzwerkzone um ein sicherheitsrelevantes Netzwerk, beispielsweise ein Sicherheitsnetz einer Bahnsicherungsanlage oder einer Automatisierungsanlage. Die zweite Netzwerkzone unterliegt geringeren Sicherheitsanforderungen und kann beispielsweise ein Büronetz oder eine über ein Büronetz oder auch das Internet angebundene Auswertungszone, auch als Backendzone oder Cloud bezeichnet, sein.

Die Erfindung wird durch die unabhängigen Ansprüchen definiert.

Mittels einer Datendiode bzw. einem One-Way-Gateway soll üblicherweise erreicht werden, dass ein Informationsfluss nur in eine Richtung, insbesondere zwischen Netzwerkzonen unterschiedlicher Sicherheitsrelevanz, möglich ist. Solche Zonenüberschreitenden Sicherheitslösungen, auch Cross-Domain Security Lösungen genannt, werden bislang für spezielle Bereiche in der Behördenkommunikation verwendet, in denen hohe Sicherheitsanforderungen gelten und in denen eine Sicherheitsklassifikation von Dokumenten beziehungsweise Informationen vorliegt. Durch eine Cross-Domain Security Lösung wird ein automatisierter sicherer Austausch von Dokumenten und Nachrichten wie beispielsweise E-Mails, zwischen unterschiedlich hohen Sicherheitszonen realisiert.

Aus der WO 2012/170485 ist eine solche Cross-Domain-Security-Lösung bekannt, bei der eine virtuelle Maschine den Informationstransfer zwischen zwei Informationsdomänen kontrolliert. Dabei wird jedoch eine spezielle Sendekomponente und eine spezielle Empfangskomponente zusätzlich zur eigentlichen Datendiode benötigt, so dass ein eigentlich bidirektionales Kommunikationsprotokoll, wie zum Beispiel das File Transfer Protocol FTP oder das Hypertext Transfer Protocol HTTP, über eine Datendiode hinweg realisiert werden kann.

Aus der US 7,941,526 B1 ist des Weiteren ein auf einem Sendeknoten vorgesehener spezieller Syslog-Daemon bekannt, wobei der Sendeknoten über eine unidirektionale Datenverbindung mit einem Empfangsknoten verbunden ist und der spezielle Syslog-Daemon dazu konfiguriert ist, eine Syslog-Nachricht von einem Syslog-Sender zu empfangen, einen Teil von IP-Informationen des Syslog-Senders in den Nachrichtenteil der empfangenen Syslog-Nachricht einzufügen und die resultierende Syslog-Nachricht an die Einweg-Datenverbindung weiterzuleiten, so dass die resultierende Syslog-Nachricht über die unidirektionale Datenverbindung an einen Syslog-Empfänger gesendet werden kann, der kommunikativ mit dem Empfangsknoten verbunden ist. Dabei wird der potenzielle Konflikt zwischen Syslog-Datenübertragungsanwendungen und unidirektionalen Datenübertragungsanwendungen gelöst, welche IP-Informationen aus Daten entfernen bevor diese über eine Einweg-Datenverbindung übertragen werden, was zu einer weiteren Verbesserung der Netzwerksicherheit durch deren Kombination führt.

Die US 7,941,526 B1 offenbart ferner einen speziellen Syslog-Daemon auf einem Sendeknoten, wobei der Sendeknoten über eine Einweg-Datenverbindung mit einem Empfangsknoten verbunden ist, wobei der spezielle Syslog-Daemon konfiguriert ist, um eine Syslog-Nachricht von einem Syslog-Sender zu empfangen, einen Teil der IP-Informationen des Syslog-Senders in die empfangene Syslog-Nachricht einzufügen und die resultierende Syslog-Nachricht auf die Einweg-Datenverbindung zu routen, so dass die resultierende Syslog-Nachricht über die Einweg-Datenverbindung an einen Syslog-Empfänger gesendet werden kann, der kommunikativ mit dem Empfangsknoten verbunden ist. Die WO 98/42107 A1 offenbart ein digitales Datenpaketübertragungssystem, das eine effizientere und höhere Dienstqualität in Anwendungen wie der Internet-Telefonie bietet. Dabei wird ein Übertragungsprotokoll verwendet, um Daten von einem ersten Benutzer oder Kunden über Standard-Telefonleitungen an einen lokalen Internet Service Provider (ISP) zu senden. Beim ISP werden die Datenpakete von TCP in UDP umgewandelt und die UDP-Pakete dann, typischerweise über eine höhere Bandbreite, an einen anderen lokalen ISP übertragen, der den Empfänger bedient. Die UDP-Pakete werden zurück in TCP-Pakete übersetzt und an den Empfänger weitergeleitet.

Bei einer Kopplung von industriellen Steuerungsnetzwerken mit einem Büronetzwerk, einem öffentlichen Internet oder anderen Steuerungsnetzwerken steht eine rückwirkungsfreie Übertragung im Vordergrund. Hierzu werden üblicherweise herkömmliche Firewalls verwendet, die die bidirektionale Datenkommunikation nach konfigurierbaren Filterregeln beschränken. Solche Lösungen garantieren jedoch nicht die Rückwirkungsfreiheit beziehungsweise nicht in der erforderlichen Güte, die bei industriellen Steuerungsnetzwerken erforderlich ist. Rückwirkungsfreiheit bedeutet dabei, dass durch die Übertragung von einer Netzwerkzone mit hoher Sicherheitsrelevanz in eine weniger sichere Netzwerkzone keinerlei Daten in die sicherheitsrelevante Netzwerkzone eingebracht werden.

Von der Firma Waterfall ist eine unidirektionale Cloud-Connect-Box bekannt, siehe http://static.waterfallsecurity.com/Unidirektional-CloudConnect-Brochure.pdf. Diese Lösung umfasst eine unidirektionale Datendiode mit einer Sendeeinheit und einer Empfangseinheit, die unterschiedlichste Netzwerkprotokolle der sicherheitsrelevanten Netzwerkzone, sowohl auf der Empfangsseite der sicherheitsrelevanten Zone als auch auf einer Empfangseinheit, die zur weniger sicherheitsrelevanten zweiten Netzwerkzone Daten weitergibt, unterstützt.

Für Netzwerkprotokolle, die in sicherheitsrelevanten Netzwerkzonen verwendet werden, müssen üblicherweise Sicherheitszertifizierungen zum Nachweis der funktionalen Sicherheit (Safety) durchgeführt werden. Dies führt dazu, dass Netzkomponenten mit solchen Protokollimplementierungen nur mit einer erneuten Zertifizierung geändert werden können. Neue Protokollimplementierungen oder auch andere Protokolle können auf solchen Komponenten somit kaum oder nur mit hohen Aufwänden und Kosten eingeführt werden. Andererseits werden Auswertedienste immer häufiger in einer von der sicherheitsrelevanten Netzwerkzone abgesetzten zentralen Netzwerkzone, auch als Cloud oder Backendzone bezeichnet, durchgeführt, die unterschiedliche Anforderungen an die Eingangsdaten stellen.

Es ist somit die Aufgabe der vorliegenden Erfindung, eine kostengünstige und flexibel anpassbare Lösung für die rückwirkungsfreie, unidirektionale Übertragung von Daten zu schaffen, die bevorzugt sowohl für Datendioden basierte Cross-Domain-Security-Lösungen als auch rückwirkungsfreie unidirektionale Daten-Gateway-Lösungen für industrielle Anwendungsbereiche geeignet ist.

Die Aufgabe wird durch das erfindungsgemäße Verfahren, beziehungsweise die erfindungsgemäße Vorrichtung gemäß den unabhängigen Ansprüchen gelöst. In den Unteransprüchen sind vorteilhafte Weiterbildungen des erfindungsgemäßen Verfahrens beziehungsweise der erfindungsgemäßen Vorrichtung dargestellt.

Gemäß einem ersten Aspekt betrifft die Erfindung ein Verfahren zur rückwirkungsfreien unidirektionalen Übertragung von Daten von einer ersten Netzwerkzone zur Auswertung an einen abgesetzten Anwendungsserver in eine zweite Netzwerkzone, mit nachfolgend genannten Verfahrensschritten: Einem Erfassen der Daten, die in einem Netzdatenformat übertragen werden, in der ersten Netzwerkzone, ein Transformieren der Daten von dem Netzdatenformat in ein Transportdatenformat sowie ein unidirektionales Übertragen der Daten in Transportdatenformat in die zweite Netzwerkzone, einem Rück-Transformieren der Daten vom Transportdatenformat und ein Übermitteln der Daten an einen Anwendungsserver, wobei das Rücktransformieren in einer räumlich von der ersten Netzwerkzone abgesetzten zweiten Netzwerkzone durchgeführt wird, wobei beim Transformieren der Netzdaten von einem Netzdatenformat in ein Transportdatenformat eine Protokollformatumwandlung von einem Netzwerkprotokoll, das in der ersten Netzwerkzone zur Übertragung der Netzdaten verwendet wird, in ein Transportprotokoll, das zur Übertragung der Netzdaten in die zweite Netzwerkzone verwendet wird, durchgeführt wird, wobei das Netzwerkprotokoll eine bidirektionale Kommunikation ermöglicht und das Transportprotokoll lediglich eine unidirektionale Kommunikation ermöglicht.

Durch das Verfahren ist eine kostengünstige und flexibel anpassbare Lösung für Datendioden-basierte Cross-Domain-Security-Lösungen als auch für rückwirkungsfreie unidirektionale Gateway-Lösungen für industrielle Steuerungsnetzwerke möglich, da die Datendiode selbst keine Konvertierungsvorrichtung umfasst, die einerseits einer Freigabe für die Verwendung im direkten Kontakt mit der ersten sicherheitsrelevanten Netzwerkzone benötigt. Damit können auch nicht zertifizierte und freigegebene Versionen des Netzwerkprotokolls zum Datenimport verwendet werden, die frei aktualisiert werden können. Andererseits ist es damit möglich, preiswert erhältliche Datendioden bzw. One-Way-Gateways, z.B. eine sogenannte Data Capture Unit, ein Network Tap oder einen Netzwerk-Switch mit Port-Spiegelung (Port Mirroring) zu verwenden, um eine rückwirkungsfreie Einwegübertragung zu realisieren, anstatt sehr teure, für spezielle Anwendungsgebiete und Sicherheitsnetze sowie Netzwerkprotokolle angepasste Hardware-Datendioden einsetzen zu müssen.

Entsprechend der vorgeschlagenen Lösung wird beim Transformieren der Netzdaten von einem Netzdatenformat in ein Transportdatenformat eine Protokollformatumwandlung von einem Netzwerkprotokoll, das in der ersten Netzwerkzone zur Übertragung der Netzdaten verwendet wird, in ein Transportprotokoll, das zur Übertragung der Netzdaten in die zweite Netzwerkzone verwendet wird, durchgeführt. Das Netzwerkprotokoll unterstützt eine bidirektionale Kommunikation, während das Transportprotokoll lediglich eine unidirektionale Kommunikation unterstützt.

Dies hat den Vorteil, dass keinerlei Daten durch die Übertragung über eine Datendiode zurück in die erste Netzwerkzone erzeugt und gesendet werden. Dies gewährleistet beziehungsweise verbessert die Rückwirkungsfreiheit der Datendiode. Mit Rückwirkungsfreiheit wird dabei bezeichnet, wenn keinerlei Nachrichtendaten oder sonstigen "Verunreinigungsbits" durch die Übertragung der Transportdaten in die zweite Netzwerkzone, in die erste Netzwerkzone eingebracht werden.

In einer vorteilhaften Ausführungsform werden in das Transportdatenformat Informationen zum verwendeten Netzwerkprotokoll eingebracht.

Damit umfasst das Transportdatenformat ausreichend Information über das Netzwerkprotokoll, um eine Rücktransformation alleine aus diesen Informationen zu ermöglichen. Damit wird eine Entkopplung der Datenübertragung zwischen erster Netzwerkzone und dem unidirektionalen Übertragen der Daten in die zweite Netzwerkzone und der Auswertung der Daten in einer zweiten abgesetzten Netzwerkzone erreicht.

In einer vorteilhaften Ausführungsform werden beim Transformieren die Daten redundant codiert und/oder den Daten Fehlererkennungscodes hinzugefügt.

Dies reduziert das Risiko einer fehlerhaften oder unvollständigen Übertragung der Daten in die zweite Netzwerkzone.

In einer vorteilhaften Ausführungsform werden die Daten beim Transformieren kryptographisch geschützt, insbesondere eine kryptographische Prüfsumme hinzugefügt und/oder die Daten verschlüsselt.

Durch eine entsprechende kryptographische Prüfsumme und/oder dem Verschlüsseln der Daten bei der Transformation vom Netzdatenformat in das Transportdatenformat sind die Daten bereits bei der Übertragung über eine unidirektionale Übertragungseinheit gegenüber Manipulationen gesichert. Bei einem nicht erlaubten Mithören oder Abzweigen der Daten im Transportdatenformat durch einen Angreifer kann dieser die Daten nicht in Klartext auslesen oder die Daten unbemerkt manipulieren.

In einer vorteilhaften Ausführungsform wird eine kryptographisch gesicherte Kommunikationsverbindung zur Übertragung der Daten im Transportdatenformat in der zweiten Netzwerkzone verwendet.

Beispielsweise werden die Daten im Transportdatenformat über eine Kommunikationsverbindung entsprechend dem Transportschicht-Sicherheitsprotokoll TLS innerhalb der zweiten Netzwerkzone übertragen. Eine solche Kommunikationsverbindung wird vorzugsweise von einem von einer unidirektionalen Übertragungsvorrichtung separierten Daten-Gateway aufgebaut, um eine Verpflichtung zur Zertifizierung und Freigabe zu vermeiden. Dadurch kann insbesondere eine Realisierung des Sicherheitsprotokolls zeitnah aktualisiert (gepatcht) werden, wenn Schwachstellen bekannt werden. Die Daten im Transportdatenformat werden somit über ein herkömmliches Netzwerkprotokoll als Nutzdaten zu einem Anwendungsserver, das heißt einem Web-Dienst übertragen. Damit ist eine hohe Kompatibilität der Lösung mit vorhandenen Backend-Technologien gegeben. Anstatt oder zusätzlich zum Transportschicht-Sicherheitsprotokoll TLS können zur Übertragung der Daten im Transportdatenformat über eine Kommunikationsverbindung innerhalb der zweiten Netzwerkzone auch andere bzw. weitere Sicherheitsprotokolle verwendet werden, z.B. IPsec/IKEv2, S/MIME, Cryptographic Message Syntax (CMS), JSON Web Encryption (JWE), JSON Web Signature (JWS) .

Ein zweiter Aspekt der vorliegenden Erfindung betrifft eine Übertragungsvorrichtung zur rückwirkungsfreien unidirektionalen Übertragung von Daten von einer ersten Netzwerkzone in eine zweiten Netzwerkzone zur Auswertung in einem abgesetzten Anwendungsserver, der folgende Komponenten aufweist: eine Datenexporteinrichtung, die in der ersten Netzwerkzone angeordnet ist und die derart ausgebildet ist, die Daten, die in einem Netzdatenformat in der ersten Netzwerkzone übertragen werden, zu erfassen und die Daten von dem Netzdatenformat in ein Transportdatenformat zu transformieren, eine unidirektionale Datenübertragungseinheit, die derart ausgebildet ist, die Daten im Transportdatenformat in die zweite Netzwerkzone unidirektional zu übertragen, sowie eine Datenimporteinrichtung, die derart ausgebildet ist, die Daten vom Transportdatenformat in das Netzdatenformat zurück zu transformieren und die Daten an einen Anwendungsserver zu übermitteln, wobei die Datenimporteinrichtung und der Anwendungsserver in einer räumlich von der ersten Zone abgesetzten zweiten Netzwerkzone angeordnet sind, wobei die Datenexporteinrichtung ferner dazu eingerichtet ist, beim Transformieren der Netzdaten von dem Netzdatenformat in das Transportdatenformat eine Protokollformatumwandlung von einem Netzwerkprotokoll, das in der ersten Netzwerkzone zur Übertragung der Netzdaten verwendet wird, in ein Transportprotokoll, das zur Übertragung der Netzdaten in die zweite Netzwerkzone verwendet wird, durchzuführen, wobei das Netzwerkprotokoll eine bidirektionale Kommunikation ermöglicht und das Transportprotokoll lediglich eine unidirektionale Kommunikation ermöglicht.

Die Datenimporteinrichtung und der Anwendungsserver müssen nicht notwendigerweise in einer gemeinsamen Netzwerkzone angeordnet sein. Sie können auch in unterschiedlichen Netzwerkzonen, die verschieden von der ersten Netzwerkzone sind, angeordnet sein. Dadurch ist eine weniger komplexe und kostengünstigere Realisierung einer rückwirkungsfreien unidirektionalen Datendiode für Industrieanwendungen sowie eine auf einer Datendiode basierende Cross-Domain-Security-Lösung realisierbar.

In einer vorteilhaften Ausführungsform ist die Übertragungsvorrichtung derart ausgebildet, das beanspruchte Verfahren auszuführen.

In einer vorteilhaften Ausführungsform ist die Datenimporteinrichtung derart ausgebildet mindestens eine weitere Transformation der Daten vom Netzdatenformat in ein weiteres Datenformat auszuführen.

Dadurch kann bereits in der Datenimporteinheit eine Anpassung des Datenformats für die Auswertung durch Anwendungsapplikationen oder den Anwendungsserver durchgeführt werden. Die Daten können somit flexibel unterschiedlichen Anwendungsapplikationen oder Anwendungsservern bereitgestellt werden.

In einer vorteilhaften Ausführungsform ist die Datenimporteinrichtung als Teil des Anwendungsservers ausgebildet.

Neben einer vom Anwendungsserver räumlich separiert ausgebildeten Datenimporteinrichtung, die innerhalb der zweiten Netzwerkzone beispielsweise über ein öffentliches Internet oder ein Büronetzwerk an die erste Netzwerkzone angebunden ist, kann die Datenimporteinrichtung vorteilhafterweise auch kombiniert als Teil des Anwendungsservers ausgebildet sein. Dies reduziert die Anzahl der zu betreibenden und damit zu wartenden Komponenten und kann somit kostengünstiger betrieben werden.

In einer vorteilhaften Ausführungsform weist die Datenexporteinrichtung eine Speichereinheit zum persistenten Speichern der Daten in der ersten Netzwerkzone auf.

Diese Daten können in der ersten Netzwerkzone somit gesammelt und beispielsweise als Logdaten zur Rekonstruktion der Datenübertragung in der ersten Netzwerkzone verwendet werden.

In einer vorteilhaften Ausführungsform ist ein Network-Tap, ein Spiegelungsport eines Netzwerkswitches oder eine Datendiode als unidirektionale Datenübertragungseinheit einsetzbar. Ein Network-Tap kann auch als Data Capturing Unit (DCU) bezeichnet werden. Die Verwendung eines Spiegelungsports eines Netzwerkswitches wird auch aus Port Mirroring bezeichnet.

Diese Ausprägungen einer Datenübertragungseinheit weisen besonders gute Eigenschaften bezüglich Rückwirkungsfreiheit auf.

In einer vorteilhaften Ausführungsform umfasst die Vorrichtung zusätzlich ein Daten-Gateway, welches derart ausgebildet ist, eine kryptographisch gesicherte Kommunikationsverbindung zur Übertragung der Daten im Transportdatenformat, zur Datenimporteinrichtung einzurichten.

Ein dritter Aspekt der Erfindung betrifft ein Computerprogrammprodukt, das direkt in einen Speicher eines digitalen Computers ladbar ist und Programmcodeteile umfasst, die dazu geeignet sind, die Schritte des Verfahrens nach einem der Ansprüche 1-7 durchzuführen.

Ausführungsbeispiel der erfindungsgemäßen Vorrichtung und des erfindungsgemäßen Verfahrens sind in den Zeichnungen beispielhaft dargestellt und werden anhand der nachfolgenden Beschreibung näher erläutert. Es zeigen:
- Figur 1: ein herkömmliche Cross-Domain Sicherheits-Gateway gemäß dem Stand der Technik in schematischer Darstellung;
- Figur 2: ein rückwirkungsfreies Daten-Gateway für Steuerungsnetzwerke gemäß dem Stand der Technik in schematischer Darstellung;
- Figur 3: ein erstes Ausführungsbeispiel einer erfindungsgemäßes Übertragungsvorrichtung, insbesondere für Steuerungsnetzwerke, in schematischer Darstellung;
- Figur 4: ein zweites Ausführungsbeispiel einer erfindungsgemäßen Übertragungsvorrichtung mit einer in einem Anwendungsserver integrierten Datenimporteinrichtung in schematischer Darstellung;
- Figur 5: ein drittes Ausführungsbeispiel einer erfindungsgemäßen Übertragungsvorrichtung, ausgebildet als eine Cross-Domain Security-Gateway in schematischer Darstellung;
- Figur 6: ein viertes Ausführungsbeispiel einer erfindungsgemäßen Übertragungsvorrichtung als Cross-Domain Security-Gateway in schematischer Darstellung; und
- Figur 7: ein Ausführungsbeispiel des erfindungsgemäßen Verfahrens als Ablaufdiagramm.

Einander entsprechende Teile sind in allen Figuren mit den gleichen Bezugszeichen versehen.

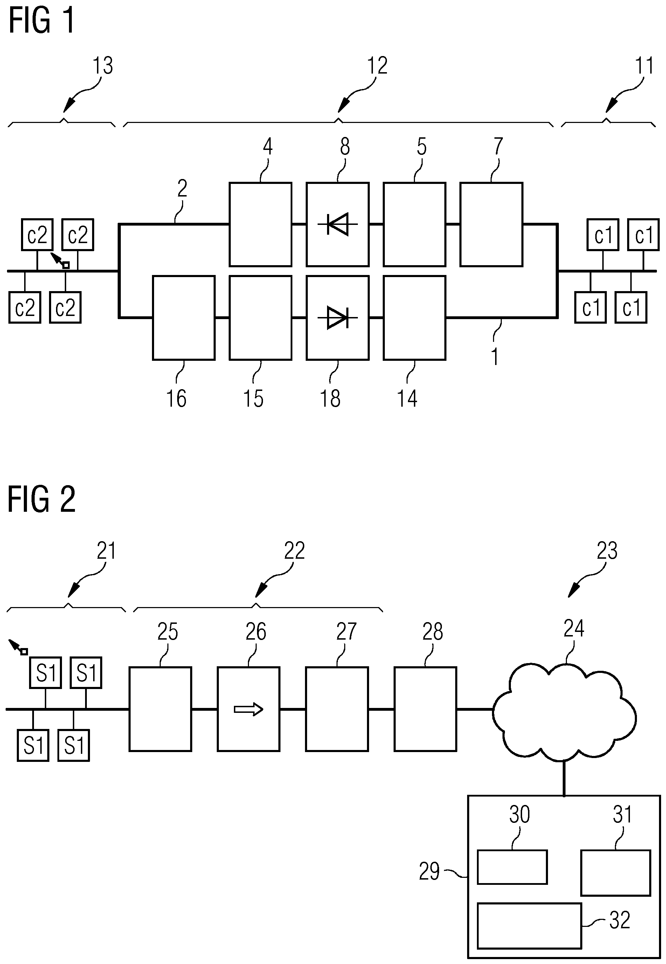

Figur 1 zeigt ein herkömmliches Cross-Domain Security-Gateway 12 mit zwei Einweg-Kommunikationsstrecken 1, 2 auf Basis von Datendioden 8, 18. Die angebundenen Netzwerkzonen 11, 13 sind unterschiedlich klassifiziert, so dass einerseits eine Netzwerkzone 13 mit niedriger Sicherheitsanforderung und demgegenüber eine Netzwerkzone 11 mit hoher Sicherheitsanforderung 11 vorliegen. Ein Datentransfer auf der EinwegKommunikationsstrecke 1 ausgehend von der zweiten Netzwerkzone 13 mit einer Sicherheitsklassifizierung "intern" ist in Richtung zur ersten Netzwerkzone 11 mit hohen Sicherheitsanforderungen und einer Klassifizierung als "Confidential" möglich, soweit der Inhalt der Daten nicht von einem Virusscanner 16 als bösartig erkannt wird. Die Nutzung der Datendiode 18 erfordert einen Bidirektional-zu-Unidirektional-Konverter 15 zur Konvertierung eines bidirektionalen Kommunikationsprotokolls, beispielsweise ein Transmission Control Protocol TCP, auf ein unidirektionales Kommunikationsprotokoll, beispielsweise das User Datagram Protocol UDP, für die Übertragung über die Datendiode 18. Nach der Datendiode 18 muss das unidirektionale Protokoll wieder durch einen Unidirektional-zu-Bidirektional-Protokoll-Konverter 14 zurück in ein bidirektionales Kommunikationsprotokoll gewandelt werden.

In Gegenrichtung auf der Einwegkommunikationsstrecke 2 von der ersten Netzwerkzone 11 in die zweite Netzwerkzone 13 ist ein Datentransfer nur möglich, wenn zu übertragende Daten bzw. ein zu übertragendes Dokument erfolgreich in einer Deklassifiziervorrichtung 7 deklassifiziert werden kann, beispielsweise von der Klassifizierung in "Confidential" auf "Intern" gemäß vorgegebener Deklassifizierungsregeln. Darauf werden die Daten in einem Bidirektional-zu-Unidirektional Konverter 5 transformiert und über die Datendiode 8 an einen Unidirektional-zu-Bidirektional Konverter 4 übergeben und zurücktransformiert. Die Daten selbst werden durch Nutzer C1 in der ersten Netzwerkzone 11 beziehungsweise Nutzer C2 in der zweiten Netzwerkzone 13 gesendet beziehungsweise empfangen.

Figur 2 zeigt nun eine herkömmliche Lösung mittels eines rückwirkungsfreien Einweg-Daten-Gateways 22 zum rückwirkungsfreien unidirektionalen Export von Daten aus einem Sicherheitsnetzwerk, das hier einer ersten Netzwerkzone 21 entspricht, in einen Anwendungsserver 29, der über ein öffentliches Netzwerk 24, beispielsweise einem Internet oder Büronetzwerk, verbunden ist. Das öffentliche Netzwerk 24 sowie der Backend-Anwendungsserver 29 befinden sich somit in einer zweiten Netzwerkzone 23.

Eine Datensendeeinrichtung 25 in der ersten Netzwerkzone 21 sammelt Diagnosedaten von beispielsweise Steuergeräten S1 und überträgt das aktuelle Datenabbild zum Beispiel als Datei oder als binäres Datenobjekt, auch Binary Blob genannt, zyklisch über eine die Rückwirkungsfreiheit garantierende Datenübertragungseinheit 26 zu einer Datenempfangseinrichtung 27.

Die Datensendeeinrichtung 25 kann auch als Oneway-Data-Provider oder Oneway-Publisher bezeichnet werden. Eine Datenempfangseinrichtung 27 empfängt die über die unidirektionale Datenübertragungseinheit 26 übermittelten Daten und kann auch als Oneway-Recipient oder Oneway-Subscriber bezeichnet werden. Die Datensendeeinrichtung 25 umfasst eine Oneway-Exportfunktion, um den Datenbestand, der Datenempfangseinrichtung 27 beispielsweise als binäres Datenobjekt bereitzustellen. Die Datenempfangseinrichtung 27 verfügt über eine Importfunktion, um den empfangenen Datenbestand zu importieren und zu interpretieren, sowie die enthaltenen Diagnosedaten, beispielsweise über ein Datengateway 28, zum Anwendungsserver 29 zu übertragen. Im Anwendungsserver 29 sind Anwendungsprogramme 30, 31, 32 zur Auswertung der übertragenen Daten enthalten.

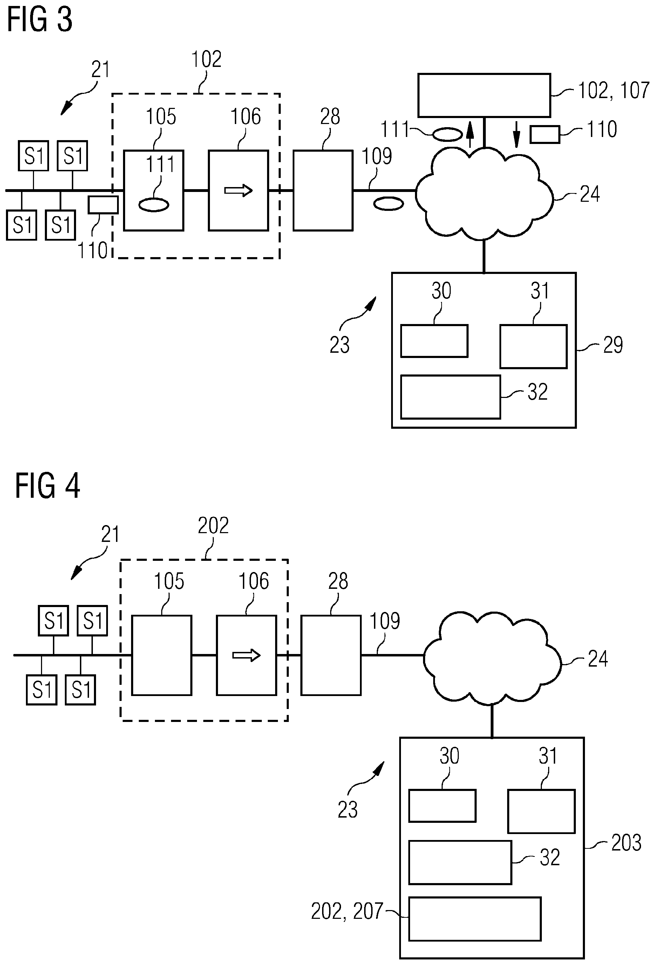

Figur 3 zeigt nun ein erfindungsgemäßes Ausführungsbeispiel einer rückwirkungsfreien Datenübertragungsvorrichtung 102 in einem industriellen Umfeld entsprechend Figur 2. Dabei sollen Daten von Nutzern oder Steuerungsgeräten S1 in einer ersten Netzwerkzone 21 in einer zweiten Netzwerkzone 23 zur Auswertung an einen Anwendungsserver 29 übertragen werden. Die Übertragung erfolgt innerhalb der zweiten Netzwerkzone 23 beispielsweise über ein zweite Datengateway 28, sowie über ein öffentliches Netzwerk 24 mit geringer Sicherheitsrelevanz.

Die unidirektionale Übertragungsvorrichtung 102 umfasst eine Datenexporteinrichtung 105, eine unidirektionale Datenübertragungseinheit 106 sowie eine Datenimporteinrichtung 107, die abgesetzt von der Datenexporteinrichtung 105 sowie von der Datenübertragungseinheit 106 in der zweiten Netzwerkzone 23 ausgebildet ist. Die Datenimporteinrichtung 107 ist beispielsweise in einer Anwendungszone, oft auch als Cloud bezeichnet, angeordnet.

In der Datenexporteinrichtung 105 werden die zu übertragenden Daten innerhalb der ersten Netzwerkzone 21 persistent, beispielsweise in einem Datenspeicher, gespeichert. Die Daten werden innerhalb der ersten Netzwerkzone 21 über eine Netzwerkverbindung gemäß einem Netzwerkprotokoll übertragen. Die Daten liegen in einem Netzdatenformat 110 vor. Typische Netzwerkprotokolle der ersten Netzwerkzone 21 sind beispielsweise das OPC Unified Architecture (OPC UA) Protokoll zur Übertragung von Maschinendaten oder ein syslog-Protokoll zur Übertragung von Log-Meldungen.

In einer Datenexporteinheit 105, die der ersten Netzwerkzone zugeordnet ist, werden nun die Daten im Netzdatenformat 110 erfasst und in ein Transportdatenformat 111 entsprechend einem Transportprotokoll transformiert. Dabei erfolgt eine Umsetzung von einem bidirektionalen Netzwerkprotokoll in ein Transportdatenformat 111, das zur Übertragung über die Einwegstrecke durch die unidirektionale Datenübertragungseinheit 106 geeignet ist. Dabei werden optional neben einer Protokollformatumwandlung die Daten redundant codiert, sodass eine Korrektur von Übertragungsfehlern ermöglicht wird, sowie Fehlererkennungscodes oder auch kryptographische Prüfsummen hinzugefügt, sodass Übertragungsfehler oder Manipulation erkennbar ist, und/oder die Daten verschlüsselt.

Das Transportdatenformat 111 enthält Information zu dem in der ersten Netzwerkzone 21 verwendeten Netzwerkprotokoll. Dadurch kann die Datenimporteinrichtung 107 eine Rücktransformation vom Transportdatenformat auf das Netzdatenformat durchführen.

Beispielsweise enthält ein Header eines Datenpakets im Transportdatenformat 111 Metadaten, die neben Angaben zum Netzwerkprotokoll, einen Zeitstempel, Ursprungsinformation wie eine IP Adresse. Die im Transportdatenformat 111 vorliegenden Daten werden zur Auskopplung durch die Datenübertagungseinheit 106 bevorzugterweise in kleinere Teildatenpakete unterteilt. Jedes Teildatenpaket enthält zusätzliche Metadaten wie beispielsweise eine Transferkennung, eine Senderkennung, die eine publish-subscribe Funktion auf der Empfangsseite unterstützt, sowie eine Paketnummer oder auch Prüfsummen zur Erkennung von Übertragungsfehler und/oder Integrität. Diese Teildatenpakete werden auf der Ausgangsseite der Datenübertragungseinheit 106 oder in der zweite Datengateway 28 terminiert, die Daten in das Transferdatenformat 111 überführt und ausgegeben.

In der Datenimporteinrichtung 107 kann eine weitere Datenformatumwandlung durchgeführt werden, um die Daten entsprechend den Anforderungen eines nachfolgenden Auswertedienstes anzupassen.

Das Datenformat, das von der Datenimporteinrichtung 107 ausgegeben wird, kann mit dem Datenformat in der ersten Netzwerkzone 21 übereinstimmen. Es ist jedoch ebenso möglich, dass das Datenformat, das von der Datenimporteinrichtung 107 ausgegeben wird, unterschiedlich zu dem Datenformat in der ersten Netzwerkzone 21 ist. So kann z.B. in der ersten Netzwerkzone 21 OPC UA als Datenformat verwendet werden, wogegen von der Datenimporteinrichtung 107 ein JSON-Datenformat ausgegeben wird.

Die Datenimporteinrichtung 107 gibt in einer Variante die Daten aus, wenn die Prüfsumme der zugeordneten empfangenen Daten korrekt überprüfbar ist. In einer weiteren Variante gibt die Datenimporteinrichtung 107 die Daten zusammen mit einer Zusatzinformation aus, die angibt, ob die Prüfsumme der zugeordneten empfangenen Daten korrekt ist.

Die unidirektionale Datenübertragungseinheit 106 überträgt nun die Daten im Transportdatenformat 111 und gibt diese beispielsweise an ein Daten-Gateway 28 aus, dass eine sichere Verbindung zur Datenimporteinheit 107 aufbaut. Als sichere Datenverbindung kann beispielsweise eine herkömmliche TLS-Verbindung gemäß dem Transport Layer Security Protokoll verwendet werden. In dieser TLS-Verbindung bleiben die Daten im Transportdatenformat 111.

Die unidirektionale Datenübertragungseinheit 106 kann als Datenauskoppeleinrichtung, beispielsweise einem Network Tap oder einer Network Data Capturing Unit, über einen Spiegelport eines Netzwerk-Switches, der ebenfalls die an dem Spiegelport anliegenden Daten identisch an einen Ausgabeport weitergibt, oder über eine Netzwerkdiode mit beispielsweise einem Lichtwellenleiter zur unidirektionalen Datenübertragung ausgebildet sein. Durch die unidirektionale Datenübertragungseinheit 106 werden die Daten außerhalb der geschlossenen, sicherheitskritischen ersten Netzwerkzone 21 verfügbar gemacht.

Außerhalb der unidirektionalen Datenübertragungseinheit 106 wird das Transportdatenformat 111 im Gegensatz zum Stand der Technik nicht in das Netzdatenformat 110 zurück konvertiert, sondern im Transportdatenformat 111 weiter übertragen.

In der Datenimporteinheit 107 werden die Daten aus dem Transferdatenformat 111 in das Netzdatenformat 110 zurück transformiert und einem Auswerteprogramm 30, 31, 32 in einem Anwendungsserver 29 bereitgestellt.

Figur 4 zeigt eine weitere Ausführungsform einer unidirektionalen Übertragungsvorrichtung 202, bei der die Datenimporteinrichtung 207 als integriert in einem Anwendungsserver 203 realisiert ist. Die Datenimporteinrichtung 207 kann auch als Cloud-Applikation in einen Anwendungsserver 203 geladen und dort ausgeführt werden. Bei einem solchen Anwendungsserver 203, beispielsweise einem IoT-Backend kann die Funktionalität in Form einer Cloud-Applikation realisiert sein.

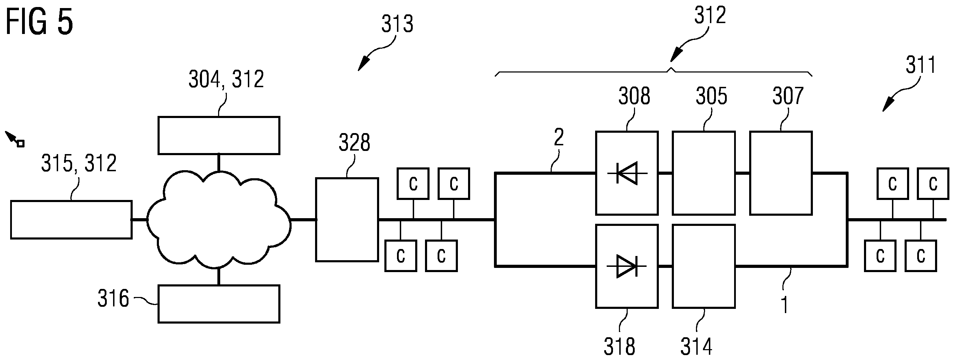

Figur 5 zeigt eine Ausführungsform der unidirektionalen Übertragungsvorrichtung 312 in einer Cross-Domain Security-Gateway-Lösung. Hier wird in der zweiten Netzwerkzone 313 ein abgesetzter, beispielsweise Internet-basierter Unidirektional-zu-Bidirektional Konverter 304, der der Datenimporteinrichtungen 105 einer unidirektionalen Übertragungsvorrichtung 102 entspricht, für eine Übertragungstrecke 2 von der ersten Netzwerkzone 311 in die zweite Netzwerkzone 313 verwendet. Wie in den vorherigen Ausführungsbeispielen ist der Unidirektional-zu-Bidirektional Konverter 304 ein logischer Bestandteil der Übertragungsvorrichtung 312, der aber räumlich getrennt von einem Bidirektional-zu-Unidirektional Konverter 305 und einer Datendiode 308 ausgebildet ist. Dabei werden in einer weiteren Variante (nicht dargestellt) die unidirektional übertragenen Daten bei der Übertragung über die Übertragungstrecke 2 in die zweite Netzwerkzone 313 über eine bidirektionale Datenkommunikationsverbindung zu dem Internetbasierten Unidirektional-zu-Bidirektional Konverter 304 übertragen (getunnelt). Dazu kann eine separate Tunnelungs-Komponente vorgesehen sein (nicht dargestellt), die zwischen Datendiode 308 und der Übertragungsstrecke 2 angeordnet ist. Diese kann z.B. unidirektional übertragene UDP-Frames über einen TCP-Kommunikationskanal oder einen TLS-Kommunikationskanal übertragen.

In gleicher Weise wird für die Übertragungsstrecke 1 von der zweiten Netzwerkzone 313 in die erste Netzwerkzone 311 ein Bidirektional-zu-Unidirektional Konverter 315, entsprechend einer Datenexporteinrichtung 105, als abgesetzte Einheit in der zweiten Netzwerkzone 313 verwendet. Ein Unidirektional-zu-Bidirektional Konverter 304, 312 führt die unidirektional in bidirektional Konvertierung 304, 312 durch, und entspricht einer Datenexporteinrichtung 105 in Figur 3 bzw. 4. In gleicher Weise kann ein Virusscanner 316 als Netzwerkdienst ausgebildet sein.

Die Unidirektional-zu-Bidirektional Konverter 304 beziehungsweise Bidirektional-zu-Unidirektional Konverter 315 sind somit einfacher ausgebildet, da nur noch eine Empfangsfunktion beziehungsweise Sendefunktion realisieren müssen. Dadurch ist insbesondere eine einfache Erweiterung für neue Protokolle oder das Schließen von Schwachstellen in verwendeten Protokoll-Stacks des Unidirektional-zu-Bidirektional Konverter 304 bzw. des Bidirektional-zu-Unidirektional Konverter 315 möglich.

Im Gegensatz zum Stand der Technik, wie er von Cross-Domain-Security-Lösungen auf Basis von Hardware-Datendioden bekannt ist, ist keine Rückkonvertierung nach der unidirektionalen Übertragung notwendig, ehe die Daten beispielsweise an ein Cloud-basiertes Backendsystem, das in einer zweiten Netzwerkzone 313, 413 mit geringerer Sicherheitsanforderung angeordnet ist, übermittelt werden. Stattdessen kann die Übertragung über eine herkömmliche Netzwerkverbindung zu dem Cloudbasierten Backendsystem übertragen und erst dort zurücktransformiert und zur Auswertung an einen Anwendungsserver übermittelt werden. Es können dadurch im Anwendungsserver redundante Cloud-basierte Dienste, beispielsweise mit automatischem Fail-Over verwendet werden. Die Umsetzung des Verfahrens durch eine solche technische Realisierung umfasst damit weniger Komponenten, die gewartet und auch zertifiziert werden müssen, so dass die Lösung eine geringere Komplexität als herkömmliche Verfahren aufweist. Dadurch sind das Verfahren und eine entsprechende Vorrichtung kosteneffizienter und leichter in vorhandene Infrastrukturen zu integrieren.

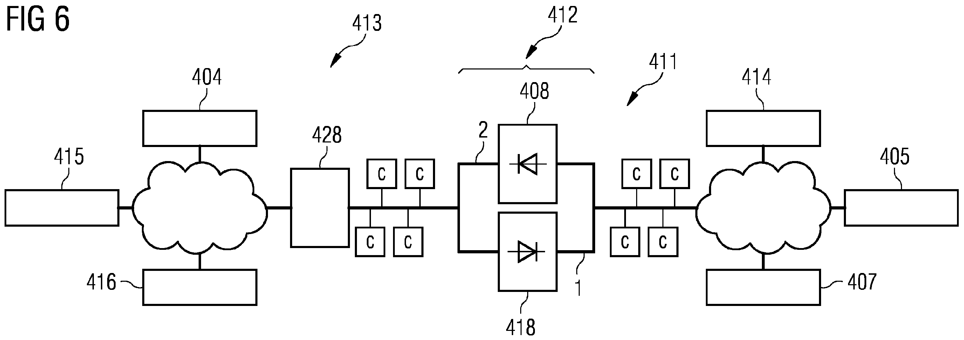

Figur 6 zeigt eine Variante, in der der Unidirektional-zu-Bidirektional Konverter 414, der dem integrierten Unidirektional-zu-Bidirektional Konverter 314 in Figur 5 entspricht und der Bidirektional-zu-Unidirektional Konverter 405, der dem integrierten Bidirektional-zu-Unidirektional Konverter 305 in Figur 5 entspricht, in der ersten Netzwerkzone 403 beispielsweise als Teil eines Hochsicherheitsrechenzentrums realisiert sind. Auch hier kann in einer weiteren Realisierungsvariante bei den Datendioden 408, 418 jeweils eine zusätzliche Tunnelungs-Komponente vorgesehen sein, welche die unidirektional übertragenen Daten in eine bidirektionale Kommunikationsverbindung überführt, sozusagen eintunnelt.

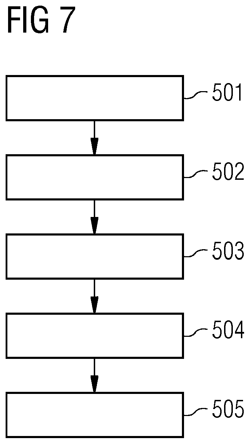

Figur 7 zeigt die einzelnen Verfahrensschritte zur rückwirkungsfreien unidirektionalen Übertragung von Daten von einer ersten Netzwerkzone 21, 311, 411 zur Auswertung in einen abgesetzten Anwendungsserver 29, 203, in einer zweiten Netzwerkzone 23, 313, 413. In einem ersten Verfahrensschritt 501 werden die Daten, die in einem Netzdatenformat in der ersten Netzwerkzone 21, 311, 411 übertragen werden, in dieser ersten Netzwerkzone 21, 311, 411 erfasst. Im Verfahrensschritt 502 werden die Daten von einem Netzdatenformat in ein Transportdatenformat transformiert und beim Verfahrensschritt 503 unidirektional im Transportdatenformat 111 in die zweite Netzwerkzone 23, 313, 413 übertragen. In der zweiten Netzwerkzone 23, 313, 413 erfolgt nun ein Rücktransformieren 504 der Daten vom Transportdatenformat in das Netzdatenformat. Dieses Rücktransformieren erfolgt in einer räumlich von der ersten Netzwerkzone abgesetzten zweiten Netzwerkzone und übermittelt die Daten im Netzdatenformat an einen Anwendungsserver, siehe Schritt 505 zur Auswertung.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur rückwirkungsfreien unidirektionalen Übertragung von Daten von einer ersten Netzwerkzone (21, 311, 411) zur Auswertung an einen abgesetzten Anwendungsserver (29, 203) in eine zweite Netzwerkzone (23, 313, 413), von einer Übertragungsvorrichtung durchgeführt und mit den Verfahrensschritten:
- Erfassen (501) der Daten, die in einem Netzdatenformat (110) übertragen werden, in der ersten Netzwerkzone (21, 311, 411),
- Transformieren (502) der Daten von dem Netzdatenformat (110) in ein Transportdatenformat (111),
- unidirektionales Übertragen (503) der Daten im Transportdatenformat (111) in die zweite Netzwerkzone (23, 313, 413),
- Rück-Transformieren (504) der Daten vom Transportdatenformat (111) in das Netzdatenformat (110), und
- Übermitteln der Daten (505) an einen Anwendungsserver (29, 203),
wobei das Rück-Transformieren (504) in einer räumlich von der ersten Netzwerkzone (21, 311, 411) abgesetzten zweiten Netzwerkzone (23, 313, 413) durchgeführt wird,
**dadurch gekennzeichnet, dass**
beim Transformieren (502) der Netzdaten von dem Netzdatenformat (110) in das Transportdatenformat (111) eine Protokollformatumwandlung von einem Netzwerkprotokoll, das in der ersten Netzwerkzone (21, 311, 411) zur Übertragung der Netzdaten verwendet wird, in ein Transportprotokoll, das zur Übertragung der Netzdaten in die zweite Netzwerkzone (23, 313, 413) verwendet wird, durchgeführt wird, wobei das Netzwerkprotokoll eine bidirektionale Kommunikation ermöglicht und das Transportprotokoll lediglich eine unidirektionale Kommunikation ermöglicht.

2. Verfahren nach Anspruch 1, wobei in das Transportdatenformat (111) Informationen zum verwendeten Netzwerkprotokoll eingebracht werden.

3. Verfahren nach einem der vorhergehenden Ansprüche, wobei beim Transformieren (502) die Daten redundant codiert werden und/oder den Daten Fehlererkennungscodes hinzugefügt werden.

4. Verfahren nach einem der vorhergehenden Ansprüche, wobei die Daten beim Transformieren (502) kryptographisch geschützt werden, insbesondere durch ein Hinzufügen einer kryptographischen Prüfsumme und/oder einem Verschlüsseln der Daten.

5. Verfahren nach einem der vorhergehenden Ansprüche, wobei eine kryptographisch gesicherte Kommunikationsverbindung (109) zur Übertragung der Daten im Transportdatenformat (111) in der zweiten Netzwerkzone (23, 313, 413) verwendet wird.

6. Verfahren nach einem der vorhergehenden Ansprüche, wobei die erste Netzwerkzone (21, 311, 411) ein Netzwerk mit hohen Sicherheitsanforderungen ist und die zweite Netzwerkzone (23, 313, 413) ein Netzwerk mit geringen Sicherheitsanforderungen ist.

7. Übertragungsvorrichtung zur rückwirkungsfreien unidirektionalen Übertragung von Daten von einer ersten Netzwerkzone (21, 311, 411) in eine zweite Netzwerkzone (23, 313, 413) zur Auswertung an einen abgesetzten Anwendungsserver (29, 203, 316, 416), enthaltend:
- eine Datenexporteinrichtung (105, 305, 405), die in der ersten Netzwerkzone (21, 311, 411) angeordnet ist und die derart ausgebildet ist die Daten, die in einem Netzdatenformat (110) in der ersten Netzwerkzone (21, 311, 411) übertragen werden, zu erfassen, und die
Daten von dem Netzdatenformat (110) in ein Transportdatenformat (111) zu transformieren,
- eine unidirektionale Datenübertragungseinheit (106, 308, 408), die derart ausgebildet ist die Daten im Transportdatenformat (111) in die zweite Netzwerkzone (23, 313, 413) unidirektional zu übertragen
- eine Datenimporteinrichtung (107, 207, 304, 404), die derart ausgebildet ist die Daten vom Transportdatenformat (111) in das Netzdatenformat (110) zurück zu transformieren, und die Daten an einen Anwendungsserver (29, 203) zu übermitteln, wobei die Datenimporteinrichtung und der Anwendungsserver (29, 203, 316, 416), in einer räumlich von der ersten Zone (21, 311, 411) abgesetzten zweiten Netzwerkzone (23, 313, 413) angeordnet sind,
**dadurch gekennzeichnet, dass**
die Datenexporteinrichtung (105, 305, 405) ferner dazu eingerichtet ist, beim Transformieren der Netzdaten von dem Netzdatenformat (110) in das Transportdatenformat (111) eine Protokollformatumwandlung von einem Netzwerkprotokoll, das in der ersten Netzwerkzone (21, 311, 411) zur Übertragung der Netzdaten verwendet wird, in ein Transportprotokoll, das zur Übertragung der Netzdaten in die zweite Netzwerkzone (23, 313, 413) verwendet wird, durchzuführen, wobei das Netzwerkprotokoll eine bidirektionale Kommunikation ermöglicht und das Transportprotokoll lediglich eine unidirektionale Kommunikation ermöglicht.

8. Vorrichtung nach Anspruch 7, wobei die Vorrichtung derart ausgebildet ist, das Verfahren gemäß den Ansprüchen 1 bis 6 auszuführen.

9. Vorrichtung nach einem der Ansprüche 7 bis 8, wobei die Datenimporteinrichtung (107, 207) derart ausgebildet ist, mindestens eine weitere Transformation der Daten vom Netzdatenformat (110) in ein weiteres Datenformat durchzuführen.

10. Vorrichtung nach einem der Ansprüche 7 bis 9, wobei die Datenimporteinrichtung (207) als Teil des Anwendungsservers (203) ausgebildet ist.

11. Vorrichtung nach einem der der Ansprüche 7 bis 10, wobei die Datenexporteinrichtung (105, 205) eine Speichereinheit zum persistenten Speichern der Daten in der ersten Netzwerkzone (21) aufweist.

12. Vorrichtung nach einem der der Ansprüche 7 bis 11, wobei als unidirektionale Datenübertragungseinheit (106, 308, 408) ein Network Tap, ein Spiegelungsport eines Netzwerk-Switches oder eine Datendiode einsetzbar ist.

13. Vorrichtung nach einem der der Ansprüche 7 bis 12, umfassend eine Datengateway (28), die derart ausgebildet ist eine kryptographisch gesicherte Kommunikationsverbindung zur Übertragung der Daten, insbesondere im Transportdatenformat, zur Datenimporteinrichtung (107, 207) einzurichten.

14. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 6 durchzuführen.

## Claims

1. Method for repercussion-free unidirectional transfer of data from a first network zone (21, 311, 411) to a second network zone (23, 313, 413) for evaluation in a remote application server (29, 203), performed by a transfer apparatus and having the method steps of:
- capturing (501) the data, which are transferred in a network data format (110), in the first network zone (21, 311, 411),
- transforming (502) the data from the network data format (110) into a transport data format (111),
- unidirectionally transferring (503) the data in the transport data format (111) to the second network zone (23, 313, 413),
- transforming (504) the data from the transport data format (111) back into the network data format (110), and
- transmitting the data (505) to an application server (29, 203), wherein the transforming back (503) is performed in a second network zone (23, 313, 413) that is physically remote from the first network zone (21, 311, 411),
**characterized in that**
the transforming (502) of the network data from the network data format (110) into the transport data format (111) involves a protocol format conversion from a network protocol used for transferring the network data in the first network zone (21, 311, 411) into a transport protocol used for transferring the network data to the second network zone (23, 313, 413) being performed, wherein the network protocol allows a bidirectional communication and the transport protocol allows only a unidirectional communication.

2. Method according to Claim 1, wherein information pertaining to the network protocol used is introduced into the transport data format (111).

3. Method according to either of the preceding claims, wherein the transforming (502) results in the data being redundantly coded and/or error recognition codes being added to the data.

4. Method according to one of the preceding claims, wherein the data are cryptographically protected during the transforming (502), in particular by adding a cryptographic checksum and/or encrypting the data.

5. Method according to one of the preceding claims, wherein a cryptographically secure communication connection (109) is used for transferring the data in the transport data format (111) in the second network zone (23, 313, 413).

6. Method according to one of the preceding claims, wherein the first network zone (21, 311, 411) is a network having high security requirements and the second network zone (23, 313, 413) is a network having low security requirements.

7. Transfer apparatus for repercussion-free unidirectional transfer of data from a first network zone (21, 311, 411) to a second network zone (23, 313, 413) for evaluation in a remote application server (29, 203, 316, 416), containing:
- a data export device (105, 305, 405), which is arranged in the first network zone (21, 311, 411) and which is designed to capture the data transferred in a network data format (110) in the first network zone (21, 311, 411), and
to transform the data from the network data format (110) into a transport data format (111),
- a unidirectional data transfer unit (106, 308, 408), which is designed to unidirectionally transfer the data in the transport data format (111) to the second network zone (23, 313, 413),
- a data import device (107, 207, 304, 404), which is designed to transform the data from the transport data format (111) back into the network data format (110), and to transmit the data to an application server (29, 203), wherein the data import device and the application server (29, 203, 316, 416) are arranged in a second network zone (23, 313, 413) that is physically remote from the first zone (21, 311, 411),
**characterized in that**
the data export device (105, 305, 405) is further configured so as, when transforming the network data from the network data format (110) into the transport data format (111), to perform a protocol format conversion from a network protocol used for transferring the network data in the first network zone (21, 311, 411) into a transport protocol used for transferring the network data to the second network zone (23, 313, 413), wherein the network protocol allows a bidirectional communication and the transport protocol allows only a unidirectional communication.

8. Apparatus according to Claim 7, wherein the apparatus is designed to carry out the method according to Claims 1 to 6.

9. Apparatus according to either of Claims 7 and 8, wherein the data import device (107, 207) is designed to perform at least one further transformation of the data from the network data format (110) into a further data format.

10. Apparatus according to one of Claims 7 to 9, wherein the data import device (207) is in the form of part of the application server (203).

11. Apparatus according to one of Claims 7 to 10, wherein the data export device (105, 205) has a memory unit for persistently storing the data in the first network zone (21).

12. Apparatus according to one of Claims 7 to 11, wherein a network tap, a mirroring port of a network switch or a data diode is usable as unidirectional data transfer unit (106, 308, 408).

13. Apparatus according to one of Claims 7 to 12, comprising a data gateway (28) designed to set up a cryptographically secure communication connection for transferring the data, in particular in the transport data format, to the data import device (107, 207).

14. Computer program product directly loadable into a memory of a digital computer, comprising program code portions suitable for performing the steps of the method according to one of Claims 1 to 6.

## Revendications

1. Procédé de transmission unidirectionnelle sans répercussion de données d'une première zone de réseau (21, 311, 411) pour évaluation à un serveur d'application distant (29, 203) vers une deuxième zone de réseau (23, 313, 413), exécuté par un dispositif de transmission et comportant les étapes suivantes :
- saisie (501), dans la première zone de réseau (21, 311, 411), des données qui sont transmises dans un format de données de réseau (110) ;
- transformation (502) des données du format de données de réseau (110) dans un format de données de transport (111) ;
- transmission unidirectionnelle (503) des données du format de données de transport (111) à la deuxième zone de réseau (23, 313, 413) ;
- retransformation (504) des données du format de données de transport (111) dans le format de données de réseau (110) et
- transfert des données (505) à un serveur d'application (29, 203),
la retransformation (504) étant effectuée dans une deuxième zone de réseau (23, 313, 413) spatialement distante de la première zone de réseau (21, 311, 411),
**caractérisé en ce que**,
lors de la transformation (502) des données de réseau du format de données de réseau (110) dans le format de données de transport (111) est effectuée une conversion de format de protocole d'un protocole de réseau, qui est utilisé dans la première zone de réseau (21, 311, 411) pour la transmission des données de réseau, dans un protocole de transport, qui est utilisé pour la transmission des données de réseau à la deuxième zone de réseau (23, 313, 413), le protocole de réseau permettant une communication bidirectionnelle et le protocole de transport permettant seulement une communication unidirectionnelle.

2. Procédé selon la revendication 1, des informations sur le protocole de réseau utilisé étant introduites dans le format de données de transport (111).

3. Procédé selon l'une des revendications précédentes, lors de la transformation (502), les données étant codées de manière redondante et/ou des codes d'identification d'erreur étant ajoutés aux données.

4. Procédé selon l'une des revendications précédentes, les données étant, lors de la transformation (502), protégées cryptographiquement, en particulier par un ajout d'une somme de contrôle cryptographique et/ou un cryptage des données.

5. Procédé selon l'une des revendications précédentes, une liaison de communication sécurisée cryptographiquement (109) étant utilisée pour la transmission des données du format de données de transport (111) dans la deuxième zone de réseau (23, 313, 413).

6. Procédé selon l'une des revendications précédentes, la première zone de réseau (21, 311, 411) étant un réseau avec des exigences de sécurité élevées et la deuxième zone de réseau (23, 313, 413) étant un réseau avec de faibles exigences de sécurité.

7. Dispositif de transmission pour la transmission unidirectionnelle sans répercussion de données d'une première zone de réseau (21, 311, 411) vers une deuxième zone de réseau (23, 313, 413) pour évaluation à un serveur d'application distant (29, 203, 316, 416), comportant :
- un dispositif d'exportation de données (105, 305, 405) qui est agencé dans la première zone de réseau (21, 311, 411) et qui est conçu de manière à saisir les données qui sont transmises dans un format de données de réseau (110) dans la première zone de réseau (21, 311, 411) et à transformer les données du format de données de réseau (110) dans un format de données de transport (111) ;
- une unité de transmission de données unidirectionnelle (106, 308, 408) qui est conçue de manière à transmettre unidirectionnellement les données dans le format de données de transport (111) à la deuxième zone de réseau (23, 313, 413) ;
- un dispositif d'importation de données (107, 207, 304, 404) qui est conçu de manière à retransformer les données du format de données de transport (111) dans le format de données de réseau (110) et à transférer les données à un serveur d'application (29, 203),
le dispositif d'importation de données et le serveur d'application (29, 203, 316, 416) étant agencés dans une deuxième zone de réseau (23, 313, 413) spatialement distante de la première Zone (21, 311, 411),
**caractérisé en ce que**
le dispositif d'exportation de données (105, 305, 405) est en outre configuré pour effectuer, lors de la transformation des données de réseau du format de données de réseau (110) dans le format de données de transport (111), une conversion de format de protocole d'un protocole de réseau, qui est utilisé dans la première zone de réseau (21, 311, 411) pour la transmission des données de réseau, dans un protocole de transport, qui est utilisé pour la transmission des données de réseau à la deuxième zone de réseau (23, 313, 413), le protocole de réseau permettant une communication bidirectionnelle et le protocole de transport permettant seulement une communication unidirectionnelle.

8. Dispositif selon la revendication 7, le dispositif étant conçu de manière à exécuter le procédé selon les revendications 1 à 6.

9. Dispositif selon l'une des revendications 7 à 8, le dispositif d'importation de données (107, 207) étant conçu de manière à effectuer au moins une autre transformation des données du format de données de réseau (110) dans un autre format de données.

10. Dispositif selon l'une des revendications 7 à 9, le dispositif d'importation de données (207) étant réalisé en tant que partie du serveur d'application (203).

11. Dispositif selon l'une des revendications 7 à 10, le dispositif d'exportation de données (105, 205) comportant une unité de mémoire pour le stockage persistant des données dans la première zone de réseau (21).

12. Dispositif selon l'une des revendications 7 à 11, en tant qu'unité de transmission de données unidirectionnelle (106, 308, 408) pouvant être utilisés un Network Tap, un port miroir d'un commutateur réseau ou une diode de données.

13. Dispositif selon l'une des revendications 7 à 12, comprenant une passerelle de données (28) qui est conçue de manière à établir une liaison de communication sécurisée cryptographiquement pour la transmission des données, en particulier dans le format de données de transport, au dispositif d'importation de données (107, 207).

14. Produit de programme informatique qui peut être chargé directement dans une mémoire d'un ordinateur numérique, comprenant des parties de code de programme qui sont adaptées pour exécuter les étapes du procédé selon l'une des revendications 1 à 6.
